# EUROPEAN PATENT SPECIFICATION

(11) **EP 2 682 280 B1**
(45) Date of publication and mention of the grant of the patent: **29.03.2017**
(21) Application number: 12752892.5
(22) Date of filing: 28.02.2012
(51) Int. Cl.: B60C 9/11, B60C 5/01, B60C 9/18, B60C 13/00

(54) **TIRE**
REIFEN
PNEU

(30) Priority: 28.02.2011 JP 2011042300; 22.03.2011 JP 2011062005; 22.03.2011 JP 2011062006
(43) Date of publication of application: 08.01.2014
(73) Proprietor: Bridgestone Corporation, Tokyo 104-8340 (JP)
(72) Inventor: KOUNO Yoshihide, Kodaira-shi Tokyo 187-0031 (JP); KON Seiji, Kodaira-shi Tokyo 187-0031 (JP)
(74) Representative: Oxley, Robin John George
(86) International application number: PCT/JP2012/054966
(87) International publication number: WO 2012/118091

(56) References cited:
- WO-A1-2010/056515
- WO-A1-2011/021703
- JP-A- 6 199 114
- JP-A- 63 312 203
- JP-A- 2001 322 402

## Description

### TECHNICAL FIELD

The present invention relates to a tire, and more specifically, to a tire related to the improvement of reinforcing members, in particular, a reinforcing member used for carcass ply and a reinforcing member for reinforcing a tread portion.

### BACKGROUND ART

A variety of reinforcing members for a tire have conventionally been studied. Examples of a common reinforcing member include a treatment formed by arranging reinforcing cords composed of steel or organic fiber parallel to one another and by rubberizing them. A technique in which such treatments are arranged by laminating such that the directions of the reinforcing cords are crossed with each other is generally used. Conventionally, by adjusting the end count of the cord or by improving the twisted structure of the cord in the reinforcing member using such reinforcing cord, the tire durability is improved.

A variety of improvement for a carcass ply of a tire have conventionally been studied. The carcass ply is a member which constitutes the skeleton of the tire, and is generally formed by arranging reinforcing cords composed of organic fiber or steel parallel to each other and by rubberizing them. Such a carcass ply has conventionally been improved from the viewpoint of the material of the cord or the twisted structure thereof.

Further, a variety of improvements of a reinforcing member used for reinforcing a tread portion of the tire also have conventionally been studied. For the purpose of reinforcing the tread portion, generally, a so-called cross belt layer formed by arranging the above-mentioned treatment by laminating such that the directions of the reinforcing cords are crossed with each other, a belt reinforcing layer formed by arranging the above-mentioned treatment on a cross belt layer such that the direction of the reinforcing cord is substantially the tire circumferential direction. In a tire for heavy load vehicles such as truck or bus, a reinforcing member which is a so-called belt protecting layer is further arranged on a cross belt layer formed by arranging a plurality of the above-mentioned treatments.

For example, Patent Document 1 discloses, as an improvement technique related to a reinforcing member which can be applied to a belt, a steel woven fabric for reinforcing rubber articles which is a twill formed by weaving a warp thread and a weft thread wherein the steel woven fabric for reinforcing rubber articles is applicable to a tire. Patent Document 2 discloses a radial tire for a motorcycle including a triaxial woven belt ply in a triaxial woven fabric shape formed by weaving a first to third belt cords which are arranged diagonally and form a predetermined angle with respect to one another. Further, as an improvement technique related to a carcass structure, for example, Patent Document 3 discloses a toric tire carcass for a road vehicle having a mesh structure comprising two ring-shape beads, and many reinforcing elements which connect them and extend between them substantially in the radial direction with respect to the beads.

### RELATED ART DOCUMENTS

### PATENT DOCUMENTS

Patent Document 1: Japanese Unexamined Patent Application Publication No. 2008-297658 (Claims and the like)
Patent Document 2: Japanese Unexamined Patent Application Publication No. H05-162508 (Claims and the like)
Patent Document 3: Japanese Unexamined Patent Application Publication No. H05-254037 (Claims and the like). Attention is also drawn to the disclosure of EP0,288,987

### SUMMARY OF THE INVENTION

### PROBLEMS TO BE SOLVED BY THE INVENTION

However, in a conventionally known reinforcing member, on the contrary to the improvement of the durability, the weight of a tire increases, which has been problematic. Since the weight of the tire directly affect the fuel consumption, the balance between the lightweight and the improvement of the durability has been desired, also from the viewpoint of low fuel consumption which recently receives attention. From the viewpoint of such demand for lightweight of a tire, it is desired that reinforcing members for the purpose of reinforcing a carcass ply or a tread portion are a lighter weight member.

Accordingly, an object of the present invention is to resolve the above-mentioned problems and to provide a tire in which the durability is improved without involving increase in weight of the tire by the improvement of the reinforcing member. Another object of the present invention is to provide a tire whose weight is reduced without compromising other performances by the improvement of a reinforcing member used for a carcass ply or a reinforcing member used for reinforcing a tread portion.

### MEANS FOR SOLVING THE PROBLEMS

The present inventors intensively studied to find that, by using a knitted fabric using a reinforcing cord as a reinforcing member, in particular, reinforcing member used for a carcass ply and reinforcing member for the purpose of reinforcing a tread portion, the above-mentioned problems can be solved, thereby completing the present invention.

In other words, the present invention comprises a tire as claimed in claim 1.

In the tire of the present invention, as the reinforcing cord, a steel cord is used. In the tire of the present invention, it is preferable that the reinforcing cord is endless at both ends of the reinforcing member in the width direction. It is also preferable that the reinforcing member is endless in the circumferential direction. More preferably, the reinforcing member is endless in the circumferential direction; and the reinforcing cord is endless at both ends of the reinforcing member in the width direction.

In the present invention, it is preferable that the reinforcing member is constituted of a plurality of types of the reinforcing cord composed of different materials. It is also preferable that the reinforcing member is constituted of the at least one reinforcing cord composed of the same material. Further, it is preferable that the reinforcing member is coated with rubber or a resin material at least on one side.

### EFFECTS OF THE INVENTION

In the present invention, by employing the above-mentioned constitution, it becomes possible to attain a tire in which the durability is improved without involving increased in the weight of the tire. In the present invention, by employing the above-mentioned constitution, it has become possible to attain a tire whose weight is reduced without compromising other performances.

### BRIEF DESCRIPTION OF THE DRAWINGS

Fig. 1 is a cross-sectional view in the width direction illustrating one example of a tire according to a first embodiment which is useful for understanding the present invention.
Fig. 2 is a plan view illustrating one example of the constitution of a reinforcing member.
Fig. 3 is a perspective view illustrating another example of the constitution of a reinforcing member.
Fig. 4 is an illustrative view illustrating still another example of the constitution of a reinforcing member.
Fig. 5 is a cross-sectional view in the width direction illustrating another example of a tire according to the first embodiment.
Fig. 6 is a cross-sectional view in the width direction illustrating still another example of a tire according to the first embodiment.
Fig. 7 is a cutaway perspective view illustrating a part of one example of a tire according to a second embodiment which is useful for understanding the present invention in a cross-section.
Fig. 8 is a cross-sectional view in the width direction illustrating one example of tire according to a third embodiment which is useful for understanding the present invention.
Fig. 9 is a cross-sectional view in the width direction illustrating one example of a tire according to a fourth embodiment which is according to the present invention.
Fig. 10 is a cross-sectional view in the width direction illustrating another example of a tire according to the fourth embodiment of the present invention.
Fig. 11 is a cross-sectional view in the width direction illustrating still another example of a tire according to the fourth embodiment of the present invention.
Fig. 12 is a cutaway perspective view illustrating a part of one example of a tire according to a fifth embodiment which is useful for understanding the present invention in a cross-section.

### MODE FOR CARRYING OUT THE INVENTION

Embodiments of the present invention will now be described in detail with reference to the Drawings.

### <First embodiment >

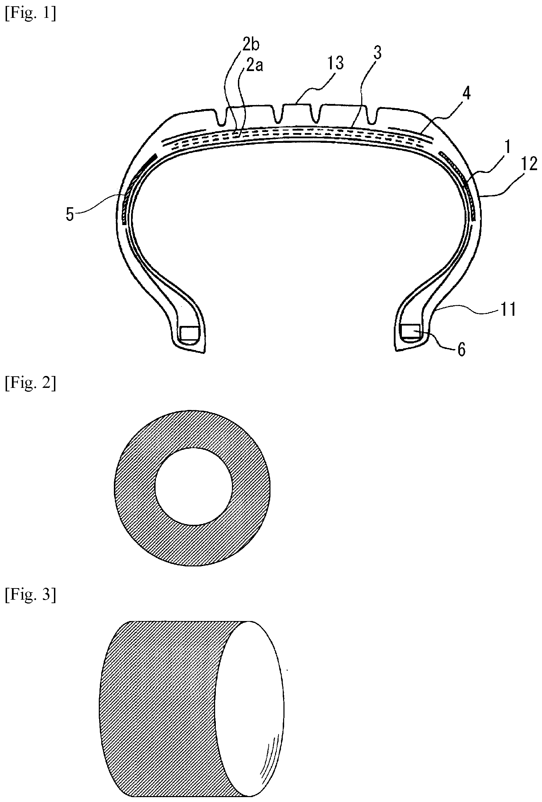

Fig. 1 is a cross-sectional view in the width direction illustrating one example of a tire according to a first embodiment which is not according to the present invention. The illustrated tire comprises a pair of left-and-right bead portions 11, side wall portions 12 extending from the bead portions 11 to the outside of the tire radial direction, and a tread portion 13 bridging both side wall portions 12, and comprises a carcass 1 composed of one carcass ply toroidally extending between a pair of left-and-right bead portions 11 as a skeleton. On the outside in the tire radial direction of the crown portion of the carcass 1, two belt layers 2a, 2b, and a cap layer 3 and a layered layer 4 are sequentially arranged.

The tire of this embodiment is characterized in that, as illustrated, a reinforcing member 5 composed of a knitted fabric using a reinforcing cord is arranged in the tire circumferential direction in a ring-shape. By constituting a reinforcing member by a knitted fabric using a reinforcing cord, the tire durability can be improved without increasing the weight of the tire, and a tire achieving a good balance between the lightweight of the tire and the improvement of the durability can be attained. Since the reinforcing member 5 composed of a knitted fabric has an excellent elasticity and is flexible and easy to be extended, it is also excellent in formability. Further, due to a larger porosity which is the ratio of portion where there exists no cord in the reinforcing member 5 composed of a knitted fabric compared to that of a reinforcing member using a conventional woven fabric, rubber easily penetrates into a gap of cords of the member 5 and the member has an excellent adhesiveness, as well as reinforcing cords are less likely to be in contact with each other, thereby reducing fretting. These features can also contribute to the improvement of the tire durability. The term "woven fabric" herein refers to those formed by crossing warp threads arranged in parallel and weft threads at right angle according to a definite rule; the term "knitted fabric" refers to those formed by making a thread in a loop shape and continuing such a loop. In other words, they differ in that while warp threads and weft threads are indispensable for a woven fabric, a knitted fabric can be formed by only a single thread. It is indisputable that a knitted fabric composed of two or more threads is within the scope of the present invention.

In the present invention, a reinforcing cord used for the reinforcing member 5 is not particularly restricted, and may be any cord such as a steel monofilament, a steel cord obtained by twisting the same. From the viewpoint of increasing the tire durability, a steel filament or steel cord having a high strength is used. The reinforcing member 5 can be constituted by at least one reinforcing cord composed of the same material or can also be formed by a plurality of reinforcing cords composed of different materials. Further, the thickness or the cross-sectional shape of the reinforcing cord is also not particularly restricted. The thickness or the cross-sectional shape of the reinforcing cord as well as the type of the above-mentioned reinforcing cord can be appropriately selected as desired. From the viewpoint of securing the adhesion with rubber, it is preferable that the surface is plated according to a common procedure when a steel material is used for a reinforcing cord; it is preferable that the surface is treated with an adhesive treatment according to a common procedure when an organic fiber cord is used for a reinforcing cord.

A method of knitting a knitted fabric constituting the reinforcing member 5 is also not particularly restricted. From the viewpoint of moldability or the like, the method can be appropriately selected as desired. Concrete example of the knitting method include jersey stich, smooth stich (1 × 1,2 × 2), inlay stich ((1), (2)), rib stich (1 × 1, 2 × 2, 3 × 3, 4 × 4). From the viewpoint of making the thickness of the obtained knitted fabric thin, jersey stich and smooth stich are preferred. When it is desired that the obtained knitted fabric has an elongation, rib stich is preferred. Inlay stitch has a characteristic intermediate therebetween.

The reinforcing member 5 can be manufactured by knitting the above-mentioned reinforcing cord using a knitting machine. For such a knitting machine, for example, an automatic seamless knitting machine (WHOLEGARMENT Knitting Machine) manufactured by SHIMA SEIKI MFG., LTD. can be favorably employed. By this, the reinforcing member 5 can be automatically manufactured without generating cutting loss.

Since the reinforcing member 5 is composed of a knitted fabric, as mentioned above, it can also be formed by only one reinforcing cord. In this case, since there are only two ends of a cord in the member, the point of beginning of knitting and the point of end of knitting, the generation of protrusion of the end of a cord (a so-called wild wire) can be inhibited, and at the same time, the effect of inhibiting separation from the end of the cord can be obtained, which are preferred. When the reinforcing cord is used up during manufacturing the reinforcing member 5 in the present invention, the ends of reinforcing cords can be twisted or bound together to be connected with each other and to be used. In cases where a steel material is employed, the ends of steel cords may be welded to be connected with each other.

In the reinforcing member 5 it is preferable that the reinforcing cord is endless at the both ends thereof in the width direction, and it is also preferable that the reinforcing cord is endless in the circumferential direction. Here, the term "endless" in the present application means that there is no cutting end or junction at both ends of the member in the width direction or in the circumferential direction. Even when there exist end portions of the reinforcing cord present at the beginning of knitting and the end of knitting of the knitted fabric at both ends of the ember in the width direction or in the circumferential direction, the member is referred to endless. More suitably, the reinforcing member 5 is endless in the circumferential direction, and reinforcing cord is endless at the both ends of the reinforcing member 5 in the width direction. By manufacturing integrally the reinforcing member 5 in a final shape of the member by a knitting machine for each member, such a reinforcing member 5 which is endless in the circumferential direction and both ends in the width direction is obtained.

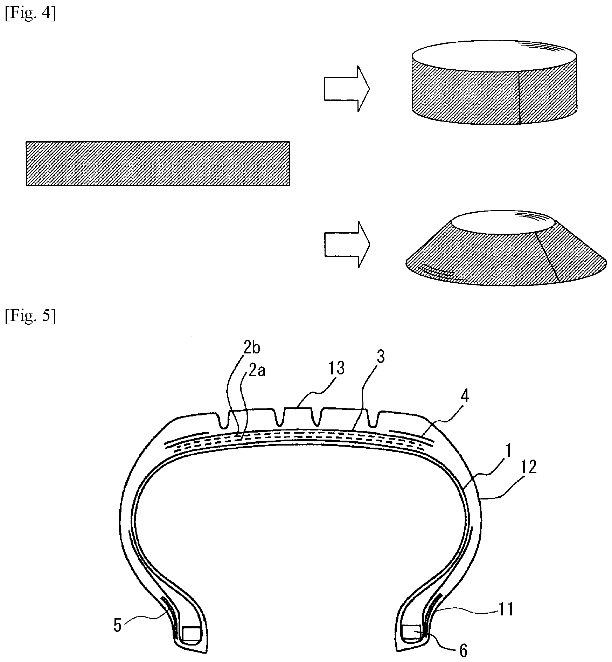

Concretely, when, for example, a reinforcing member 5 having a toric plate shape or a cylinder shape as illustrated in Fig. 2, Fig. 3 is integrally manufactured not to have a cutting surface, the reinforcing member 5 is endless in the circumferential direction and at the both ends in the width direction. When a knitted fabric in a belt shape is manufactured and the ends are joined together to form a cylinder shape or a truncated cone shape as illustrated in Fig. 4, a reinforcing member 5 which is endless in the both ends in the width direction is obtained. Here, the ends, the beginning of knitting and the end of knitting of the knitted fabric can be joined by sewing them together by using a reinforcing cord composed of the same material as or a different material from that of the reinforcing cord constituting the knitted fabric. A commercially available nylon thread or a PET thread, a cotton thread or the like may be used. In the present invention, the shape and the structure of the reinforcing member 5 are not limited to these illustrated example, and a reinforcing member having any shape and structure can be easily manufactured by the above-mentioned knitting machine.

In the present embodiment, the above-mentioned reinforcing member 5 may not be coated with rubber. The reinforcing member 5 may be arranged at a tire reinforcing position on a green tire, and rubber may be coated thereon. Alternatively, one side or both sides of the reinforcing member 5 may be coated with rubber. For example, a method in which on one side or both sides of the reinforcing member 5 is coated by rubber sheet by rolling may be employed.

In the present embodiment, the reinforcing member 5 can be arranged on any region in the tire width direction, and suitably, is arranged on the side wall portion 12 as illustrated in Fig. 1. By this, the effect of improving the cut resistant property of the side wall portion can be obtained. As illustrated in Fig. 5, it is also preferable that the reinforcing member 5 is arranged at a region of the bead portion 11 in contact with a rim. By this, the effect of preventing a failure of breaking of a ply by being sandwiched by a rim flange, a so-called pinch cut can be obtained. Suitably, the reinforcing members 5 are arranged on both of the regions. In either case, the reinforcing member 5 is preferably arranged on the outside of the carcass ply 1 in the tire radial direction. This is because there is a small concern for the generation of wound on the inside of the tire.

It is important for the tire of the present embodiment only that the above-mentioned reinforcing member 5 is arranged. Details of the tire structure other than that are not particularly limited, and can be appropriately constituted according to a common procedure.

For example, the carcass 1 is formed by rubberize a steel cord or an organic fiber cord. Although, in the illustrated example, one carcass is used, two or more carcasses may be used, and suitably, one to two carcasses may be used. A belt layer 2a, 2b are formed by rubberizing a plurality of steel cords arranged being inclined at an angle of, for example, 15 to 40° with respect to the tire circumferential direction, and the layers are arranged such that they are crossed with each other. Although, in the illustrated example, two layers thereof are used, three or more layers thereof may be used. For example, two to four layers thereof can be provided.

Although, in the illustrated example, the cap layer 3 and the layered layer 4 are arranged on the outside of the belt layers 2a, 2b in the tire radial direction, the arrangement is optional in the present invention, and these layers may not be provided. Each of the cap layer 3 and layered layer 4 is formed by rubberizing steel cords or organic fiber cords arranged substantially parallel to the tire circumferential direction. As illustrated, among the layers, at least one of the cap layer 3 is arranged across the full width or more of the belt layer 2a, 2b, and at least one of the layered layer 4 is arranged at the both ends of regions of the belt layers 2a, 2b.

Further, as illustrated, at pair of bead portions 11 of the tire bead cores 6 are embedded respectively, and the carcass 1 is turned up around each of the bead cores 6 from the inside to the outside of the tire to be locked. Further, on the surface of the tread portion 13, a tread pattern is appropriately formed, and on the innermost layer, an inner liner (not illustrated) is formed. Further, in the illustrated tire of the present invention, as a gas with which the tire, a normal air or an air in which the partial oxygen pressure is changed or an inert gas such as nitrogen can be used. The tire of the present embodiment can be manufactured according to a common procedure, but not particularly restricted.

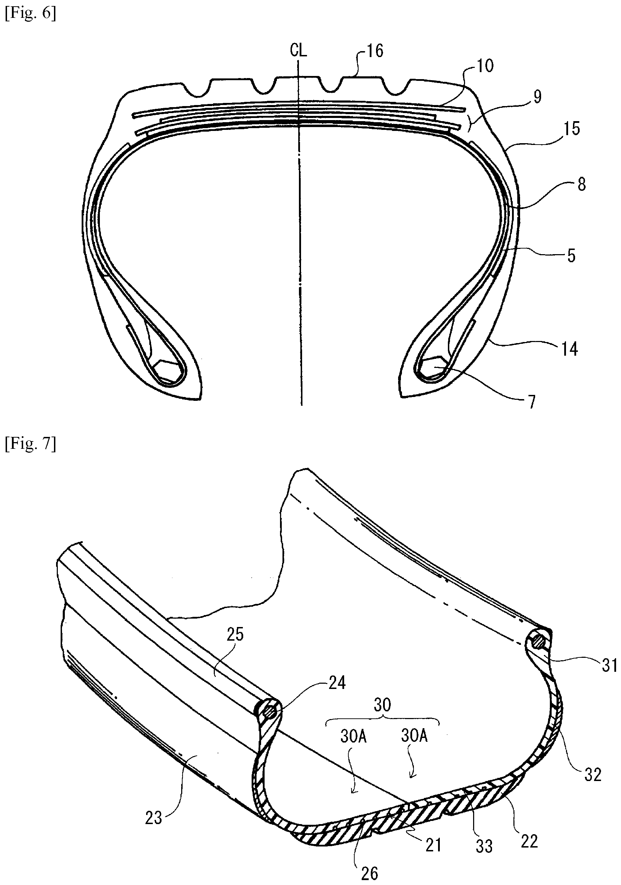

Fig. 6 illustrates a cross-sectional view in the width direction of a heavy load pneumatic tire which is applied to a heavy load vehicle such as a truck or a bus as another example of a pneumatic tire according to the first embodiment. The illustrated tire comprises a pair of left-and-right bead portions 14, side wall portions 15 extending from the bead portions 14 to the outside of the tire radial direction, and a tread portion 16 bridging between the both side wall portions 15, and comprises a carcass 8 composed of one carcass ply toroidally extending between a pair of bead cores 7 embedded respectively in a pair of left-and-right bead portions 14 as a skeleton. On the outside in the tire radial direction of the crown portion of the carcass 8, at least two, in the illustrated example, three belt layers 9 and belt protecting layer 10 are sequentially arranged.

Although, in the illustrated tire, the carcass 8 is formed by rubberizing a steel cord, and at least one carcass 8 needs to be arranged, two or more carcasses 8 may be arranged. Normally, as illustrated, the carcass 8 is turned up around the bead core 7 from the inside to the outside of the tire to be locked. The belt layer 9 is formed by rubberizing a plurality of steel cords arranged in parallel inclined at an angle of, for example, 15 to 55° with respect to the tire circumferential direction. In the illustrated example, three, normally at least two belt layers 9 are arranged being crossed with each other in the layers. Further, on the outside of the belt layer 9 in the tire radial direction, one or more belt protecting layers 10 can be arranged.

Also in the illustrated tire, by arranging the reinforcing member 5 at the side wall portion 15, the effect of improving the cut resistant property of the side wall portion can be obtained. Although not illustrated, the reinforcing member 5 can be arranged at a region of the bead portion 14 in contact with a rim. By this, the effect of preventing a failure of breaking of a ply by being sandwiched by a rim flange, a so-called pinch cut can be obtained. Preferably, the reinforcing members 5 are arranged on both of the regions. In either case, the reinforcing member 5 is preferably arranged on the outside of the carcass ply 8 in the tire radial direction. This is because there is a small concern for the generation of wound on the inside of the tire.

Also on the surface of the tread portion 16 of the illustrated heavy load tire, a tread pattern is appropriately formed, and on the innermost layer, an inner liner (not illustrated) is formed. As a gas with which the tire, a normal air or an air in which the partial oxygen pressure is changed or an inert gas such as nitrogen can be used.

### <Second embodiment>

Fig. 7 is a cutaway perspective view illustrating a part of one example of a tire according to a second embodiment, which is not according to the present invention, in a cross-section. As illustrated, the tire of the present embodiment has a substantially similar cross-sectional shape to that of a conventional common rubber pneumatic tire, and comprises a ring-shaped skeletal body composed of a resin material at least from the side portion to the tread portion.

The illustrated tire comprises a tire case 30 made of a resin material which is a ring-shaped skeletal body composed of a pair of left-and-right bead portions 31 in contact with a bead sheet portion of a rim and a rim flange, a side wall portion 32 extending from the bead portions 31 to the outside in the tire radial direction, and a tread portion 33 bridging between both side wall portions 32. On the outside of the tread portion 33 in the tire radial direction, a crown portion reinforcing layer 21 composed of a spirally wound steel cord is arranged, and on the further outer circumference thereof, a tread rubber layer 22 is arranged.

As illustrated, the tire of the present embodiment is also characterized in that a reinforcing member 23 composed of a knitted fabric using a reinforcing cord is arranged in the tire circumferential direction in a ring-shape, by which a similar effect to that in the case of the above-mentioned first embodiment can be obtained. The reinforcing member 23 used in the present embodiment can be constituted basically similarly to the above-mentioned reinforcing member 5.

In the present embodiment, the above-mentioned reinforcing member 23 is preferably coated with rubber or a resin material on one side or both sides. Here, when the reinforcing member 23 is coated with a resin material, concretely, for example, a method in which the reinforcing member 23 is set in an injection mold to inject a resin material or a method in which the reinforcing member 23 is set in a compression molding mold and a resin material is poured threreinto can be used. Alternatively, compression bonding may be performed by heating a sheet composed of a resin material and pressing.

Also in the present embodiment, the reinforcing member 23 may be arranged any region in the tire width direction, and suitably, as illustrated in Fig. 7, is arranged at the side wall portion 32. Although, for a tire of the present embodiment which has a structure without a carcass, the cut resistant property of the side wall portion particularly becomes a problem, by arranging the above-mentioned reinforcing member 23 composed of a knitted fabric having lightweight and high strength at the side wall portion, the side wall portion is effectively reinforced, thereby obtaining the effect of improving the cut resistant property of the side wall portion.

It is important also for the tire of the present embodiment only that the above-mentioned reinforcing member 23 is arranged. Details of the tire structure other than that are not particularly limited, and can be appropriately constituted according to a common procedure.

For example, the tire case 30 can be formed by facing each other a pair of toric tire half-bodies 30A having the same shape formed by molding a one-side bead portion 31 and side wall portion 32 and a tread portion 33 having a half width thereof integrally by a mold or the like and joining them at the tire equatorial plane. The tire case 30 is not limited to those formed by joining two members in the above manner, and may be those formed by joining three members, or may be those formed by molding the pair of bead portions 31 and side wall portions 32 and the tread portion 33 between the both side wall portions integrally. In the present embodiment, the tire case may be formed in a complete tube shape in which the end portions of the bead portions inside in the tire radial direction extend inside in the tire axis direction to be connected. As a method of joining a junction when the tire case is formed by joining a plurality of members, a welding method using a molten resin or a hot plate welding method can be used. The molten resin used here may be the same resin material as that constituting the tire case or may be a different material therefrom.

For a resin material constituting the tire case 30, a thermosetting resin, a thermoplastic resin, a thermoplastic elastomer (TPE) or the like having a rubber-like elasticity can be used. In view of the elasticity needed during travelling or the formability during manufacturing or the like, a thermoplastic elastomer is preferably used. Examples of the thermoplastic elastomer include an amide thermoplastic elastomer (TPA), an ester thermoplastic elastomer (TPC), an olefin thermoplastic elastomer (TPO), a styrene thermoplastic elastomer (TPS), a urethane thermoplastic elastomer (TPU), thermoplastic vulcanizates (TPV) into which a rubber resin is kneaded as a part thereof, and other thermoplastic elastomers (TPZ) defined in JIS K6418. Examples of the thermoplastic resin include a urethane resin, an olefin resin, a vinyl chloride resin and a polyamide resin. Further, examples of the thermosetting resin include a phenol resin, an urea resin, a melamine resin, an epoxy resin and a polyester resin. Among these, TPA, TPC, TPO, TPU and TPV are preferred. Here, the tire case 30 of the present embodiment as a whole may be formed by a single resin material. Similarly to a conventional common rubber pneumatic tire, resin materials having different characteristics may be used for individual regions of the tire case 30 (a bead portion 31, a side wall portion 32, a crown portion 33 or the like).

The above-mentioned resin material preferably has a deflection temperature under load at 0.45 MPa in accordance with ISO 75-2 standard or D648 standard of 60°C or higher, in particular, 85 to 130°C. Further, the above-mentioned resin material preferably has a tensile strength at yield point of 10 MPa or higher, in particular, 15 to 50 MPa, and has an elongation at yield point of 10% or higher, in particular, 15 to 35%. Further, the above-mentioned resin material preferably has an elongation at break of 50% or higher, in particular, 100 to 600%, and has a Vicat softening point based on K7206 A method of 130°C or higher, in particular, 150 to 300°C.

Since the tire case 30 or the tire half-body 30A can be formed by, for example, vacuum forming, pressure forming, injection molding or melt casting, the manufacturing process can be made considerably simple and molding time can be made short compared with cases where molding (vulcanization) by rubber is performed. When symmetrical tire half-bodies 30A having the same shape as illustrated are employed, there is also an advantage in that only one type of mold for molding the tire half-body 30A is needed.

In the present embodiment, it is preferred that, in order to secure the rigidity of the bead portion 31 and to improve the fitting property with the rim, at the bead portion 31, as illustrated, a toric bead core 24 composed of a metal material or a resin material similar to that of a conventional common pneumatic tire is embedded. If the rigidity of the bead portion 31 is secured and there is no problem with the fitting property with a rim, the bead core 24 may be omitted. Examples of the metal material which constitutes the bead core include a steel cord. For the resin material, a variety of organic fiber cords can be used.

In the present embodiment, it is preferable that, on a contact portion of the bead portion 31 with a rim, or at least on a portion where the bead portion 31 is in contact with a rim flange of the rim, a toric sealing member 25 composed of a material softer than a resin material constituting the tire case 30, for example, a rubber having an elasticity and excellent sealing properties (air tightness) is arranged. The sealing member 25 for a portion which is in contact with a bead sheet may also be formed. As the rubber which forms the sealing member 25, it is preferred that a rubber similar to those used for the outer surface of a bead portion of a conventional common rubber pneumatic tire is used. If the sealing properties with a rim can be secured using only a resin material constituting the tire case 30, the sealing member 25 may be omitted. For the sealing member 25, other types of resin materials having more excellent sealing properties than that of the resin material constituting the side wall portion 32 may also be used.

Further, in the present embodiment, on the tread portion 33, a crown portion reinforcing layer 21 composed of a reinforcing cord 26 spirally wound in the tire circumferential direction is arranged. As the reinforcing cord, a steel filament or a steel cord twisting the same, or an organic fiber cord can suitably be employed. All of the reinforcing cord 26 constituting the crown portion reinforcing layer 21 may be embedded in the tread portion 33, or a part of the reinforcing cord 26 may be embedded in the tread portion 33. The percentage of embedded reinforcing cord 26 is preferably 1/5 or higher of the diameter of the reinforcing cord 26, and more preferably more than 1/2 of the diameter of the reinforcing cord 26. Most preferably, as illustrated, all of the reinforcing cord 26 is embedded in the tread portion 33. When the amount of embedded reinforcing cord 26 is more than 1/2 of the diameter of the reinforcing cord 26, the reinforcing cord 26 is less likely to project from the surface of the tread portion due to its size. When all of the reinforcing cord 26 is embedded in the tread portion 33, the surface of the tread portion becomes flat, and when a member is placed on the tread portion, air is less likely to penetrate. The crown portion reinforcing layer 21 corresponds to a belt which is arranged on the outer circumferential surface of a carcass of a conventional rubber pneumatic tire. The crown portion reinforcing layer 21 may be formed only by a reinforcing cord 26 or may be a sheet shaped one formed by coating the reinforcing cord 26 with a resin material such as a thermoplastic resin.

Further, in the present embodiment, on a tread portion on the outer peripheral side of the crown portion reinforcing layer 21, a tread rubber layer 22 composed of a rubber having a more excellent abrasion resistance than that of the resin material which forms the tire case 30 is arranged. As a rubber used for the tread rubber layer 22, it is preferable that the same rubber as those used for a tread rubber of a conventional rubber pneumatic tire is used. A tread layer composed of other types of resin materials having a more excellent abrasion resistance than that of the resin material constituting the side wall portion 32 may be provided on the outer peripheral portion. On the surface of the tread rubber layer 22, similarly to a conventional rubber pneumatic tire, a tread pattern constituted by a plurality of grooves can be appropriately formed on the contact surface with a road surface.

Although not illustrated, in the tire of the present embodiment, the side wall portion 32 may have a radius of curvature in the tire circumferential direction. Concretely, the side wall portion 32 is formed such that a plurality of circular arc portions having a center of curvature inside the tire are connected in the tire circumferential direction. The circular arc portions are provided, depending on the size, the load or the like of the tire, for example, in the case of a vehicle tire, in the number range of 6 to 90, and in particular, in the number range of 12 to 60. The circular arc portions are, from the viewpoint of the uniformity, arranged at a regular interval in the tire circumferential direction. By this, the stress applied to the side wall portion 32 can be dispersed into the stress in the radial direction and the stress in the tire circumferential direction, and thus the stress in the radial direction can be reduced compared to a shape not having a circular arc portion in the tire circumferential direction, whereby it becomes easy to sufficiently secure a pressure resistance performance (inner pressure) for a pneumatic tire used for a vehicle even when a thermoplastic material is used for the side wall portion 32. Accordingly, it becomes possible to secure the pressure resistance performance (inner pressure) only by the shape of the side wall portion 32, and it also becomes possible to omit a carcass which has been needed for a conventional rubber pneumatic tire.

The tire of the present embodiment can be manufactured according to a common procedure, for example, based on the method described in WO2010-95688, WO2010-95655, WO2010-95654 or the like except for the reinforcing member.

### <Third embodiment>

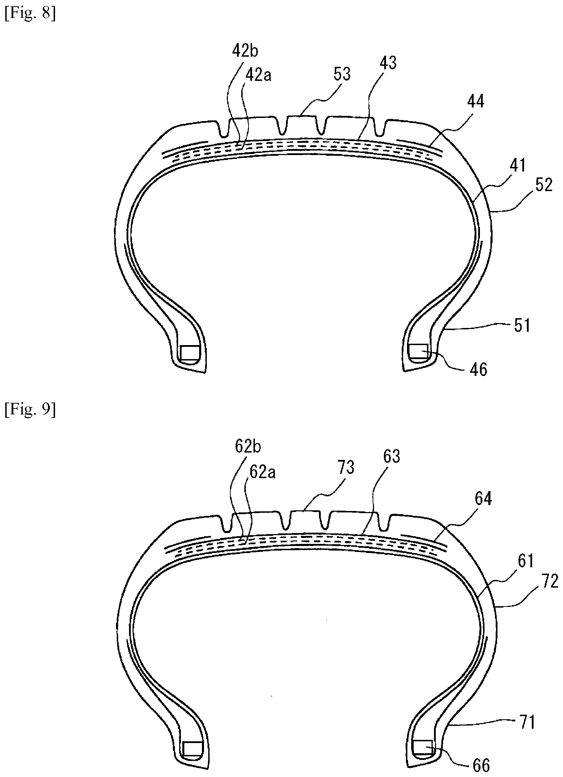

Fig. 8 is a cross-sectional view in the width direction illustrating one example of a tire according to a third embodiment which is not according to the present invention. As illustrated, the tire of the present embodiment comprises a pair of left-and-right bead portions 51, side wall portions 52 extending from the bead portions 51 to the outside of the tire radial direction, and a tread portion 53 bridging both side wall portions 52, and comprises a carcass 41 composed of one carcass ply toroidally extending between a pair of left-and-right bead portions 51 as a skeleton. On the outside in the tire radial direction of the crown portion of the carcass 41, two belt layers 42a, 42b, and a cap layer 43 and a layered layer 44 are sequentially arranged. The reference sign 46 in the figure represents a bead core.

In the tire of the present embodiment, a carcass ply constituting the carcass 41 is constituted of a reinforcing member composed of a knitted fabric using a reinforcing cord. By constituting a carcass ply by a knitted fabric using a reinforcing cord, it becomes possible to attain a tire whose weight is reduced without compromising other performances, as well as, similarly to the case of the above-mentioned first embodiment or the like, an advantages of a favorable formability or the improvement of the tire durability can be obtained. The reinforcing member used in the present embodiment can also be constituted basically similarly to the above-mentioned reinforcing member 5 or the like.

It is important for the present embodiment only that the above-mentioned reinforcing member composed of a knitted fabric is applied to a carcass ply. Details of the tire structure other than that are not particularly limited, and can be appropriately constituted according to a common procedure similarly to the above-mentioned first embodiment.

In the present embodiment, when the carcass 41 is composed of two or more carcass plies, at least one of two or more of carcass plies need to be constituted by the above-mentioned reinforcing member composed of a knitted fabric. Suitably, all carcass plies are constituted by the above-mentioned reinforcing member composed of a knitted fabric. Although a vehicle tire illustrated in Fig. 8 is explained here, the present embodiment is not limited to a vehicle tire. The above-mentioned heavy load tire applied to a heavy load vehicle such as a truck or a bus as illustrated in Fig. 6 to which the present embodiment is applied is also useful.

### <Fourth embodiment>

Fig. 9 is a cross-sectional view in the width direction illustrating a vehicle tire as one example of a tire according to the fourth embodiment, which is according to the present invention. As illustrated, the tire of the present embodiment comprises a pair of left-and-right bead portions 71, side wall portions 72 extending from the bead portions 71 to the outside of the tire radial direction, and a tread portion 73 bridging both side wall portions 72, and comprises a carcass 61 composed of one carcass ply toroidally extending between a pair of left-and-right bead portions 71 as a skeleton. On the outside in the tire radial direction of the crown portion of the carcass 61, two reinforcing members 62a, 62b, and a cap layer 63 and a layered layer 64 are sequentially arranged. The reference sign 66 in the figure represents a bead core.

In the tire of the present embodiment, a reinforcing member composed of a knitted fabric using a reinforcing cord is arranged at a tread portion in the tire circumferential direction in a ring-shape. By constituting reinforcing member used for the purpose of reinforcing a tread portion by a knitted fabric using a reinforcing cord, it becomes possible to attain a tire whose weight is reduced without compromising other performances, as well as, similarly to the case of the above-mentioned first embodiment or the like, an advantages of a favorable formability or the improvement of the tire durability can be obtained. The reinforcing member used in the present embodiment can also be constituted basically similarly to the above-mentioned reinforcing member 5 or the like.

As illustrated in Fig. 9, in the present embodiment, concretely, for example, at least one, suitably two to four, in the illustrated example, two of the above-mentioned reinforcing members 62a, 62b composed of a knitted fabric can be arranged on the outside of a crown portion of the carcass 61 in the tire radial direction in place of a belt layer made of a rubberized reinforcing cord layer. In this case, the reinforcement of tread portion can be performed only by the above-mentioned reinforcing members 62a, 62b composed of a knitted fabric which is arranged in place of a belt layer. As illustrated, on the outside of the reinforcing members 62a, 62b in the tire radial direction, the above-mentioned cap layer 63 and layered layer 64 may further be arranged. As mentioned above, the cap layer 63 and layered layer 64 have a cord direction substantially in the tire circumferential direction. At least one of the cap layer 63 can be arranged across the full width or more of the reinforcing member; at least one of the layered layer 64 can be arranged at the both ends of regions of the reinforcing member.

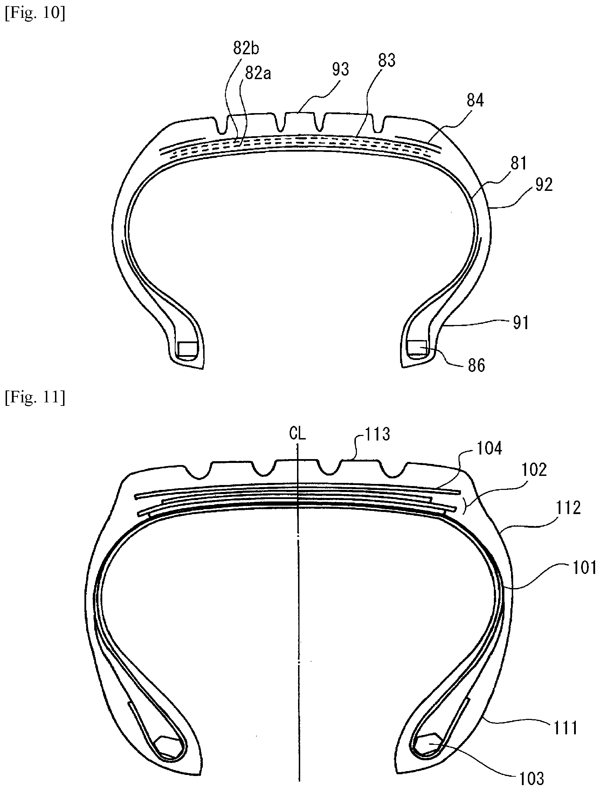

Fig. 10 is a cross-sectional view in the width direction illustrating another example of a tire according to the fourth embodiment of the present invention. In the illustrated tire, on the outside of a crown portion of the carcass 81 in the tire radial direction, at least one belt layer in which the cord direction is inclined with respect to the tire circumferential direction, in the illustrated example, two belt layers 82a, 82b are arranged, and on the outside thereof in the tire radial direction, at least one, suitably two to four, in the illustrated example, one of the above-mentioned reinforcing members 83, 84 composed of a knitted fabric are individually arranged in place of the cap layer and layered layer. Further, in the present embodiment, the above-mentioned reinforcing member composed of a knitted fabric may be arranged in place of all of the belt layer, cap layer and layered layer (not illustrated). Namely, in the present embodiment, in place of one or the combination of two or more of normally used pair of inclined belt layers, a cap layer and a layered layer, appropriate number of the above-mentioned reinforcing members composed of a knitted fabric can be arranged. The reference sign 86 in the figure represents a bead core; the reference sign 91 a bead portion; the reference sign 92 a side wall portion; and the reference sign 93 a tread portion.

Fig. 11 is a cross-sectional view in the width direction illustrating a small-sized or large-sized heavy load tire as a still another example of a tire according to the fourth embodiment of the present invention. The illustrated tire comprises a pair of left-and-right bead portions 111, side wall portions 112 extending from the bead portions 111 to the outside of the tire radial direction, and a tread portion 113 bridging both side wall portions 112, and comprises a carcass 101 composed of one carcass ply toroidally extending between a pair of left-and-right bead portions 111 as a skeleton. On the outside in the tire radial direction of the crown portion of the carcass 101, at least two, in the illustrated example, three belt layers 102 are arranged. The reference sign 103 in the figure represents a bead core.

In the illustrated tire, on the outside of the belt layer 102 in the tire radial direction, the at least one, in the illustrated example, one, suitably, one to three above-mentioned reinforcing members 104 composed of a knitted fabric are arranged. Namely, in a heavy load tire according to the present embodiment, normally, in place of a belt protecting layer which is arranged on the outside of the belt layer in the tire radial direction, an appropriate layers of the above-mentioned reinforcing members composed of a knitted fabric can be arranged. In the heavy load tire, the above-mentioned reinforcing member composed of a knitted fabric is not used in place of the belt layer because when the reinforcing member composed of a knitted fabric is tensioned, there is a concern that the member may break from a mesh portion of knitted fabric.

It is important for the present embodiment only that the above-mentioned reinforcing member composed of a knitted fabric is applied to the purpose of reinforcing a tread portion. Details of the tire structure other than that are not particularly limited, and can be appropriately constituted according to a common procedure similarly to the above-mentioned first embodiment.

### <Fifth embodiment>

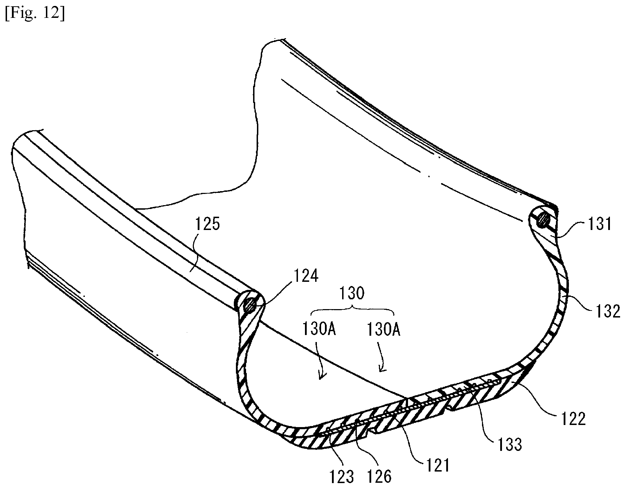

Fig. 12 is a cutaway perspective view illustrating a part of one example of a tire according to a fifth embodiment which is not according to the present invention in a cross-section. As illustrated, similarly to a tire according to the second embodiment illustrated in Fig. 7, the tire of the present embodiment has a substantially similar cross-sectional shape to that of a conventional common rubber pneumatic tire, and comprises a ring-shaped skeletal body composed of a resin material at least from the side portion to the tread portion.

The illustrated tire comprises a tire case 130 made of a resin material which is a ring-shaped skeletal body composed of a pair of left-and-right bead portions 131 in contact with a bead sheet portion of a rim and a rim flange, a side wall portion 132 extending from the bead portions 131 to the outside in the tire radial direction, and a tread portion 133 bridging between both side wall portions 132. On the outside of the tread portion 133 in the tire radial direction, a crown portion reinforcing layer 121 composed of a spirally wound steel cord is arranged, and on the further outer circumference thereof, a tread rubber layer 122 is arranged.

As illustrated, the tire of the present embodiment is also characterized in that a reinforcing member 123 composed of a knitted fabric using a reinforcing cord is arranged at a tread portion in the tire circumferential direction in a ring-shape, by which a similar effect to that in the case of the above-mentioned fourth embodiment can be obtained. The reinforcing member 123 used in the present embodiment can be constituted basically similarly to the above-mentioned reinforcing member 23. The reference sign 130A in the Figure represents a tire half-body; the reference sign 124 a bead core; the reference sign 125 a sealing member; and the reference sign 126 a reinforcing cord, respectively.

In the present embodiment, concretely, as illustrated, at least one, suitably two to three of the above-mentioned reinforcing members 123 composed of a knitted fabric can be arranged between a tire case 130 which is a skeletal body and a tread rubber layer 122 arranged on the outside of the crown portion in the tire radial direction. In this case, as illustrated, the above-mentioned reinforcing member 123 composed of a knitted fabric may be arranged on the outside of the crown portion reinforcing layer 121 in the tire radial direction. Although not illustrated, without arranging the crown portion reinforcing layer 121, the reinforcing member 123 may be arranged in place of the crown portion reinforcing layer 121.

It is important for the tire of the present embodiment only that the above-mentioned reinforcing member composed of a knitted fabric is applied to the purpose of reinforcing a tread portion. Details of the tire structure other than that are not particularly limited, and can be appropriately constituted according to a common procedure similarly to the above-mentioned second embodiment.

### EXAMPLES

The present invention will now be explained in more detail by way of Examples.

### <Example 1 not according to the invention>

By using an automatic seamless knitting machine (WHOLEGARMENT Knitting Machine) manufactured by SHIMA SEIKI MFG., LTD., a knitted fabric using a steel monofilament (wire diameter : 0.15 mm) was manufactured by inlaid knit in a belt shape. The belt shaped knitted fabric was formed into a cylinder shape depending on the portion to be applied, to obtain a reinforcing member using a knitted fabric having a thickness of 0.3 mm.

One of the obtained reinforcing member of a knitted fabric was arranged on the whole side wall portion which is a region of a tread portion from the end portion to the upper end portion of the bead portion to manufacture a heavy load tire having the tire size of 275/80R22.5. In the tire, one carcass ply (material: steel cord) was used. On the outside of the carcass ply in the tire radial direction, four steel belt layers (cord structure: 1+6, cord diameter: 1.2 mm, end count: 25/50 mm) which were denoted as the first to the fourth steel belt layers sequentially from the inside in the tire radial direction were sequentially arranged at angles of +52°, +18°, -18° and +18° with respect to the tire circumferential direction.

### <Example 2>

A test tire of Example 2 was manufactured similarly to Example 1 except that a knitted fabric reinforcing member manufactured similarly to Example 1 was not arranged on a side wall portion, but was arranged in place of the first belt of the four belt layers.

### <Example 3>

A test tire of Example 3 was manufactured similarly to Example 1 except that a knitted fabric reinforcing member manufactured similarly to Example 1 was not arranged on a side wall portion, but was arranged in place of the fourth belt of the four belt layers.

### <Example 4>

A test tire of Example 4 was manufactured similarly to Example 1 except that a knitted fabric reinforcing member manufactured similarly to Example 1 was not arranged on a side wall portion, but was arranged in place of the first belt and the fourth belt of the four belt layers, respectively.

### <Conventional Example 1>

A test tire of Conventional Example 1 was manufactured similarly to Example 1 except that a knitted fabric reinforcing member was not arranged, and that by increasing the rubber gauge, the gauge of the side wall portion was thickened from 4 mm in Example 1 to 7 mm. Here, the "gauge" of the side wall portion means the average value of the thickness from the outer surface of the side wall portion to the outer surface of the carcass line measured in the direction perpendicular to the carcass line at a region of the side wall portion where the reinforcing member was arranged in Example 1.

### <Evaluation Method >

For each of the obtained test tires, a travelling test was performed using the conditions of an inner pressure of 900 kPa and a speed of 65 km per hour. The durability was evaluated by whether a failure occurred when the load was increased stepwisely from a regular load to a load 1.9 times the regular load. The results are listed on the Table below together with the index value of the weight of each test tire setting the index value of Conventional Example 1 to 100. Regarding the tire weight, the smaller the index value, the more lightweight, which is favorable.

**[Table 1]**

| | Weight (index) | Durability |
|---|---|---|
| Example 1 | 94 | Complete |
| Example 2 | 93 | Complete |
| Example 3 | 93 | Complete |
| Example 4 | 90 | Complete |
| Conventional Example 1 | 100 | Complete |

From the results in the above-mentioned Table, it was confirmed that, in the test tire of each Example, the same durability as that of the tire of the Conventional Example 1 was secured, as well as the lightweight of the tire of the Conventional Example was attained.

### <Example 5 not according to the invention>

By using an automatic seamless knitting machine (WHOLEGARMENT Knitting Machine) manufactured by SHIMA SEIKI MFG., LTD., a knitted fabric using a steel monofilament (wire diameter: 0.15 mm) was manufactured by inlaid knit in a belt shape. The belt shaped knitted fabric was formed into a cylinder shape, to obtain a reinforcing member using a knitted fabric having a thickness of 0.3 mm.

By using the obtained reinforcing member of a knitted fabric, a tire having such a structure as illustrated in Fig. 7 was manufactured in a tire size of 225/45R17. The tire comprised a ring-shaped skeletal body composed of a resin material (material: nylon elastomer) from a pair of left-and-right bead portions to a tread portion. On the outside of a crown portion of a skeletal body in the tire radial direction, a crown portion reinforcing layer composed of a spirally wound steel cord (cord structure: 1×5, cord diameter: 0.5 mm, end count: 25/50 mm), a tread rubber layer (rubber type: natural rubber, thickness : 8 mm) were arranged. In this tire, one of the above-mentioned reinforcing member was arranged on the whole of the side wall portion which is a region on the outside of the skeletal body in the tire radial direction from the end portion of the tread portion to the upper end portion of the bead portion.

### <Example 6 not according to the invention>

A test tire of Example 6 was manufactured similarly to Example 5 except that a knitted fabric reinforcing member manufactured by using a steel monofilament (wire diameter : 0.15 mm) and an aramid fiber cord (material: Kevlar (registered trademark) (DU PONT-TORAY CO., LTD., filament type 29), cord diameter: 1670 dtex) as reinforcing cords was used as a reinforcing cord.

### <Example 7 not according to the invention>

A test tire of Example 7 was manufactured similarly to Example 5 except that a knitted fabric reinforcing member manufactured by using an aramid fiber cord (material: Kevlar (registered trademark) (DU PONT-TORAY CO., LTD., filament type 29), cord diameter: 1670 dtex) as reinforcing cords was used as a reinforcing cord.

### <Example 8 not according to the invention>

A test tire of Example 8 was manufactured similarly to Example 5 except that a knitted fabric was manufactured directly into a cylinder shape by an automatic seamless knitting machine (WHOLEGARMENT Knitting Machine) manufactured by SHIMA SEIKI MFG., LTD.

### <Conventional Example 2>

A test tire of Conventional Example 2 was manufactured similarly to Example 5 except that a knitted fabric reinforcing member was not arranged, and that by increasing the rubber gauge, the gauge of the side wall portion was thickened from 3 mm in Example 5 to 5 mm. Here, the "gauge" of the side wall portion means the average value of the thickness from the outer surface of the side wall portion to the outer surface of the carcass line measured in the direction perpendicular to the carcass line at a region of the side wall portion where the reinforcing member was arranged in Example 5.

### <Evaluation Method >

Each of the obtained test tires was inflated to an inner pressure of 180 kPa and was travelled 20,000 km at a speed of 81 km per hour in a state in which a regular load was loaded to evaluate the durability. The results are listed on the Table below together with the index value of the weight of each test tire setting the index value of Conventional Example 2 to 100. Regarding the tire weight, the smaller the index value, the more lightweight, which is favorable.

**[Table 2]**

| | Weight (index) | Durability |
|---|---|---|
| Example 5 | 95 | Complete |
| Example 6 | 94 | Complete |
| Example 7 | 93 | Complete |
| Example 8 | 94 | Complete |
| Conventional Example 2 | 100 | Complete |

From the results in the above-mentioned Table, it was confirmed that, in the test tire of each Example, the same durability as that of the tire of the Conventional Example 2 was secured, as well as the lightweight of the tire of the Conventional Example was attained.

### DESCRIPTION OF SYMBOLS

- 1, 8, 61, 81, 101: Carcass
- 2a, 2b, 9, 42a, 42b, 82a, 82b, 102: Belt layer
- 3, 43, 63: Cap layer
- 4, 44, 64: Layered layer
- 5, 23, 62a, 62b, 83, 84, 104: Reinforcing member
- 6, 7, 46, 86, 103: Bead core
- 10: Belt protecting layer
- 11, 14, 31, 51, 71, 91, 111, 131: Bead portion
- 12, 15, 32, 52, 72, 92, 112, 132: Side wall portion
- 13, 16, 33, 53, 73, 93, 113, 133: Tread portion
- 21, 121: Crown portion reinforcing layer
- 22, 122: Tread rubber layer
- 24, 124: Bead core
- 25, 125: Sealing member
- 26, 126: Reinforcing cord
- 30, 130: Tire case
- 30A, 130A: Tire half-body
- 41: Carcass (reinforcing member)

## Claims

1. A tire comprising a pair of left-and-right bead portions (51, 71, 91, 111) and side wall portions (52, 72, 92, 112), and a tread portion (53, 73, 93, 113) bridging between both the side wall portions, wherein the tire comprises as a skeleton a carcass (41, 61, 81, 101) composed of at least one carcass ply toroidally extending between the pair of bead portions, **characterized in that**
the tire comprises at least two belt layers (42a, 42b, 82a, 82b, 102) on the outside of a crown portion of the carcass in the tire radial direction; and
a reinforcing member (62a, 62b, 83, 84, 104) composed of a knitted fabric using a reinforcing cord composed of a steel cord, which is applied only for reinforcing the tread portion on the outside of the belt layers in the tire radial direction, is arranged in a ring-shape in the tire circumferential direction.

2. The tire according to claim 1, wherein the reinforcing cord is endless at both ends of the reinforcing member in the width direction.

3. The tire according to claim 1, wherein the reinforcing member is endless in the circumferential direction.

4. The tire according to claim 1, wherein the reinforcing member is endless in the circumferential direction; and the reinforcing cord is endless at both ends of the reinforcing member in the width direction.

5. The tire according to any one of claims 1 to 4, wherein the reinforcing member is constituted of a plurality of types of the reinforcing cord composed of different materials.

6. The tire according to any one of claims 1 to 4, wherein the reinforcing member is constituted of the at least one reinforcing cord composed of the same material.

7. The tire according to any one of claims 1 to 6, wherein the reinforcing member is coated with rubber or a resin material at least on one side.

## Patentansprüche

1. Reifen, umfassend ein Paar von linken und rechten Stegabschnitten (51, 71, 91, 111) und Seitenwandabschnitten (52, 72, 92, 112), und einen Laufflächenabschnitt (53, 73, 93, 113), welcher den Abstand zwischen den beiden Seitenwandabschnitten überbrückt, wobei der Reifen als Skelett eine Karkasse (41, 61, 81, 101) umfasst, welche zumindest eine Karkassenschicht aufweist, welche sich torusförmig zwischen dem Paar von Stegabschnitten erstreckt, **dadurch gekennzeichnet, dass**
der Reifen zumindest zwei Gürtellagen (42a, 42b, 72a, 82b, 102) auf der Außenseite eines Kronabschnitts der Karkasse in der Reifenradialrichtung umfasst; und
ein Verstärkungsglied (62a, 62b, 83, 84, 104), welches aus einem Gewirke durch Verwendung eines Verstärkungskords aus Stahlkord gebildet ist, welcher nur zum Verstärken des Stegabschnitts auf der äußeren Seite der Gürtelschichten in der Reifenradialrichtung aufgetragen ist, ringförmig in der Reifenumfangsrichtung angeordnet ist.

2. Reifen nach Anspruch 1, wobei der Verstärkungskord an beiden Enden des Verstärkungsglieds in der Breiterichtung endlos ist.

3. Reifen nach Anspruch 1, wobei das Verstärkungsglied in der Umfangsrichtung endlos ist.

4. Reifen nach Anspruch 1, wobei das Verstärkungsglied in der Umgangsrichtung endlos ist; und der Verstärkungskord an beiden Enden des Verstärkungsglieds in der Breitenrichtung endlos ist.

5. Reifen nach einem der Ansprüche 1 bis 4, wobei das Verstärkungsglied aus einer Mehrzahl von Typen von Verstärkungskorden besteht, welche aus unterschiedlichen Materialien bestehen.

6. Reifen nach einem der Ansprüche 1 bis 4, wobei das Verstärkungsglied aus zumindest einem Verstärkungskord aus demselben Materiale besteht.

7. Reifen nach einem der Ansprüche 1 bis 6, wobei das Verstärkungsglied von Gummi oder einem Harzmaterial zumindest auf einer Seite überzogen ist.

## Revendications

1. Bandage pneumatique, comportant une paire de parties de talon de gauche et de droite (51, 71, 91, 111) et des parties de flanc (52, 72, 92, 112), et une partie de bande de roulement (53, 73, 93, 113) s'étendant entre les deux parties de flanc, le bandage pneumatique comportant comme squelette une carcasse (41, 61, 81, 101) comprenant au moins une nappe de carcasse s'étendant toroïdalement entre la paire de parties de talon, **caractérisé en ce que** :
le bandage pneumatique comprend au moins deux couches de ceinture (42a, 42b, 82a, 82b, 102) sur l'extérieur d'une partie de sommet de la carcasse, dans la direction radiale du bandage pneumatique ; et
un élément de renforcement (62a, 62b, 83, 84, 104) composé de tissu tricoté utilisant un câblé de renforcement composé d'un câblé d'acier, appliquée uniquement pour renforcer la partie de bande de roulement sur l'extérieur des couches de carcasse, dans la direction radiale du bandage pneumatique, est agencé en une forme annulaire dans la direction circonférentielle du bandage pneumatique.

2. Bandage pneumatique selon la revendication 1, dans lequel le câblé de renforcement est sans fin au niveau des deux extrémités de l'élément de renforcement dans la direction de la largeur.

3. Bandage pneumatique selon la revendication 1, dans lequel l'élément de renforcement est sans fin dans la direction circonférentielle.

4. Bandage pneumatique selon la revendication 1, dans lequel l'élément de renforcement est sans fin dans la direction circonférentielle; et le câblé de renforcement est sans fin au niveau des deux extrémités de l'élément de renforcement dans la direction de la largeur.

5. Bandage pneumatique selon l'une quelconque des revendications 1 à 4, dans lequel l'élément de renforcement est constitué par plusieurs types de câblé de renforcement composés de matériaux différents.

6. Bandage pneumatique selon l'une quelconque des revendications 1 à 4, dans lequel l'élément de renforcement est constitué par le au moins un câblé de renforcement composé du même matériau.

7. Bandage pneumatique selon l'une quelconque des revendications 1 à 6, dans lequel l'élément de renforcement est revêtu de caoutchouc ou d'un matériau de résine, au moins sur un côté.
